(19) **Europäisches Patentamt / European Patent Office / Office européen des brevets**

(11) **EP 4 383 727 A1**

(12) **EUROPEAN PATENT APPLICATION**

(43) Date of publication:
**12.06.2024 Bulletin 2024/24**

(21) Application number: **22213643.4**

(22) Date of filing: **14.12.2022**

(51) International Patent Classification (IPC):
**H04N 21/2381** (2011.01)   **H04N 21/242** (2011.01)
**H04N 21/43** (2011.01)   **H04N 21/4788** (2011.01)
**H04N 21/8547** (2011.01)   **H04N 21/436** (2011.01)

(52) Cooperative Patent Classification (CPC):
**H04N 21/43076; H04N 21/2381; H04N 21/242; H04N 21/43615; H04N 21/4788; H04N 21/8547**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022 PT 2022118385**

(71) Applicant: **NOS Inovação, S.A.**
**4460-191 Senhora da Hora (PT)**

(72) Inventors:
  • **PINTO SEQUEIRA DOS SANTOS GRAÇA, Jorge Filipe**
  **4460-191 SENHORA DA HORA (PT)**
  • **NUNES FERREIRA, João Miguel**
  **4460-191 SENHORA DA HORA (PT)**

  • **TIDÓ, Emanuele**
  **4460-191 SENHORA DA HORA (PT)**
  • **GUILHERME OLIVEIRA, Fernando José**
  **4460-191 SENHORA DA HORA (PT)**
  • **CARDOS LOPES, João Manuel**
  **4460-191 SENHORA DA HORA (PT)**
  • **PRETO XAVIER, Tiago Francisco**
  **4460-191 SENHORA DA HORA (PT)**
  • **MARQUES, Pedro**
  **4460-191 SENHORA DA HORA (PT)**
  • **MENDES, Edgar**
  **4460-191 SENHORA DA HORA (PT)**
  • **VARGAS, Nuno**
  **4460-191 SENHORA DA HORA (PT)**

(74) Representative: **do Nascimento Gomes, Rui**
**J. Pereira da Cruz, S.A.**
**Rua Victor Cordon, 10-A**
**1249-103 Lisboa (PT)**

(54) **METHOD AND SYSTEM FOR MEDIA CONTENT PLAYBACK SYNCHRONIZATION IN A PLURALITY OF DISPLAY DEVICES**

(57) The present application relates to a computer implemented method for media content playback synchronization in a plurality of client display devices (2.1, 2.2, 2.3). Such method, therefore provides that playback of content streamed from a network server (1.1) is automatically synchronized for users at different client display devices (2.1, 2.2, 2.3). Synchronization is achieved using a synchronization scheme implement solely between client display devices (2.1, 2.2, 2.3), which is performed during content playback in a dedicated virtual playback room (1.2). Each slave-device (2.2, 2.3) submits playback status to a master-device (2.1) while the master-device (2.1) generates and sends synchronization instructions for each slave-device (2.2, 2.3). The synchronization instructions are based on the difference in playback position between the client devices (2.1, 2.2, 2.3).

Figure 1

**Description**

**FIELD OF THE APPLICATION**

The present application is enclosed in the area of data communication. More particularly, it relates to a method for synchronized streaming media content playback.

**PRIOR ART**

With development of the Internet, people may view video content at different times from downloaded video files, using video-on-demand services or streaming video content. In particular, a user may access a network service, select content to be retrieved, stream the content and view it whenever the user wishes.

Though streaming content to view at any time may be convenient for a particular user, it is difficult to coordinate simultaneous viewings by different users at different locations.

Several conventional methods exist for media synchronization over multiple devices. One is global timing synchronization by hardware clock system or network time protocol (NTP). NTP provides Coordinated Universal Time (UTC). NTPv4 can usually maintain time within 10 milliseconds (1/100s) over the public Internet, and can achieve accuracies of 200 microseconds (1/5000s) or better in local area networks under ideal conditions. Although NTP protocol can guarantee accurate physical layer synchronization, it cannot reflect the synchronization requirement of the media playing in application layer. In order to map the media playing time line with the physical time line, the terminal needs to check the system clock frequently, which will add the overhead and complexity of software implementation in the terminal. Another method is deployed for quality of service (QoS) guarantee, such as bandwidth guarantee or delay guarantee. When a user is watching multiple display devices simultaneously, a certain amount of time delay is tolerable; however, the delay should be guaranteed and predictable by using media transmission QoS control protocol, such as RTCP (RTP Control Protocol) in conjunction with the RTP (Real-time Transport protocol). RTP carries the media streams (e.g., audio and video), and RTCP is used to monitor transmission statistics and QoS information. In RTCP protocol, report packets are sent periodically to report transmission and reception statistics for all RTP packets sent during a time interval. This type of protocol can guarantee the synchronization at packet level from one sender to multiple receivers, but it still cannot guarantee the playback synchronization finally presented to the viewer because of the difference of packet processing, buffer control, audio/video decoding and player rendering in multiple display devices. The final subjective impression about synchronization from viewer's point of view totally depends on the media frames displayed on screens of display devices.

However, existing solutions are highly complex and do not guarantee that synchronization is maintained between all devices, throughout the transmission of streaming media content. The present solution intended to innovatively overcome such issues.

**SUMMARY OF THE APPLICATION**

It is therefore an object of the present application a computer implemented method for media content playback synchronization in a plurality of client display devices. Such method, therefore provides that playback of content streamed from a network server is automatically synchronized for users at different client display devices. Synchronization is achieved using a synchronization scheme implement solely between client display devices, which is performed during content playback. Each slave-device submits playback status to a master-device while the master-device generates and sends synchronization instructions for each slave-device. The synchronization instructions are based on the difference in playback position between the client devices.

It is also an object of the present application, a system for media content playback synchronization in a plurality of client display devices.

**DESCRIPTION OF FIGURES**

Figure 1 - representation of an embodiment of the system's network architecture for media content playback synchronization as described in the present application. The reference signs represent:

    1.1 - media content server;
    1.2 - communication interface implementing the virtual playback room;
    2.1 - master-device;

2.2, 2.3 - slave-devices.

Figure 2 - representation of an embodiment of the method for media content playback synchronization in a plurality of client display devices described in the present application, illustrating the synchronisation behaviour occurring during the playback of a streaming media content, when a new device joins the virtual playback room. The reference signs represent:

    2.1 - master-device;
    2.2, 2.3 - slave-devices;
    a. - master-device already in the virtual playback room;
    b. - slave-device already in the virtual playback room;
    c. - new slave device joins the room and send a hello message type to the master-device;
    d. - the master-device sends a synchronization message to the new slave-device.
    e. - new slave-device calculates the position of streaming media content flow to be reproduced.

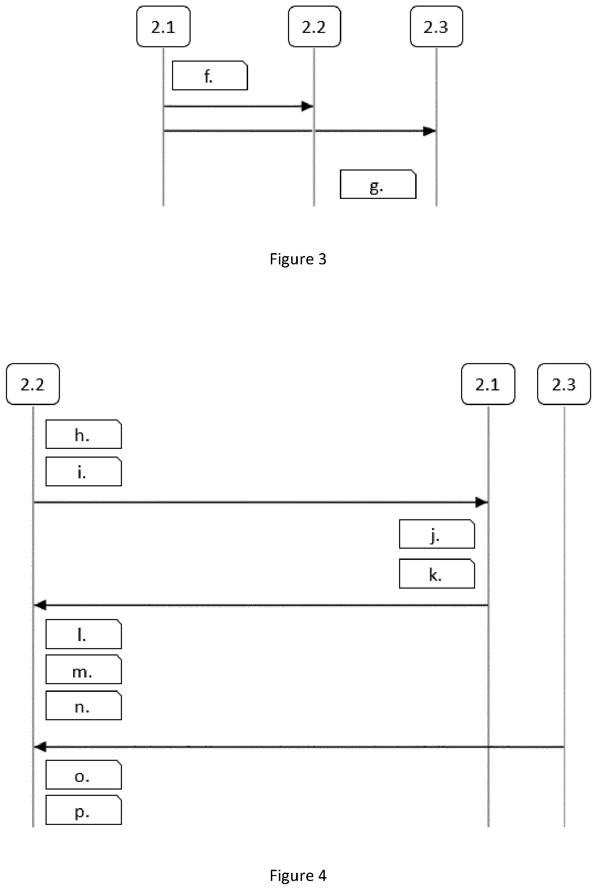

Figure 3 - representation of an embodiment of the method for media content playback synchronization in a plurality of client display devices described in the present application, illustrating the synchronisation behaviour occurring during the playback of a streaming media content, when the master-device change content position. The reference signs represent:

    2.1 - master-device;
    2.2, 2.3 - slave-devices;
    f. - master-device change the position of streaming media content flow and notify all slave-devices with a synchronization message;
    g. - slave-devices calculate the new position to seek.

Figure 4 - representation of an embodiment of the method for media content playback synchronization in a plurality of client display devices described in the present application, illustrating the synchronisation behaviour occurring during the playback of a streaming media content, when a master-device leaves the virtual playback room. The reference signs represent:

    2.1 - master-device;
    2.2, 2.3 - slave-devices;
    h. - announce time interval expires;
    i. - slave device (2.2) transmits an announce message to the master-device (2.1);
    j. - master-device (2.1) check the relative position between its position and the position of the slave device (2.2) that sent the announce message;
    k. - master-device (2.1) sends a synchronization message to the slave-device (2.2);
    l. - master-device (2.1) lefts the room;
    m. - announce time interval expires;
    n. - former slave-device (2.2) is the new master-device;
    o. - slave device (2.3) is ahead of new master-device; new master-device needs to synchronize his player;
    p. - new master-device moves player timebar to sync with slave-device (2.3).

## DETAILED DESCRIPTION

The more general and advantageous configurations of the present application are described in the Summary of the application. Such configurations are detailed below in accordance with other advantageous and/or preferred embodiments of implementation.

In a preferred aspect of the method for media content playback synchronization in a plurality of client display devices of the present application, the media content is streamed from a media content server and comprises the following steps:

In a first step of the method, a master-device (2.1) creates a server-based virtual playback room (1.2) of streaming media content. More particularly, in order to create said virtual playback room (1.2), the master-device (2.1) may execute the following set of actions:

-　Accessing to the media content server (1.1);
-　selecting a streaming media content to be reproduced;

- creating a virtual playback room (1.2) to playback the selected streaming media content; said room (1.2) comprising a correspondent access link;
- transmitting the access link to at least one slave-device (2.2).

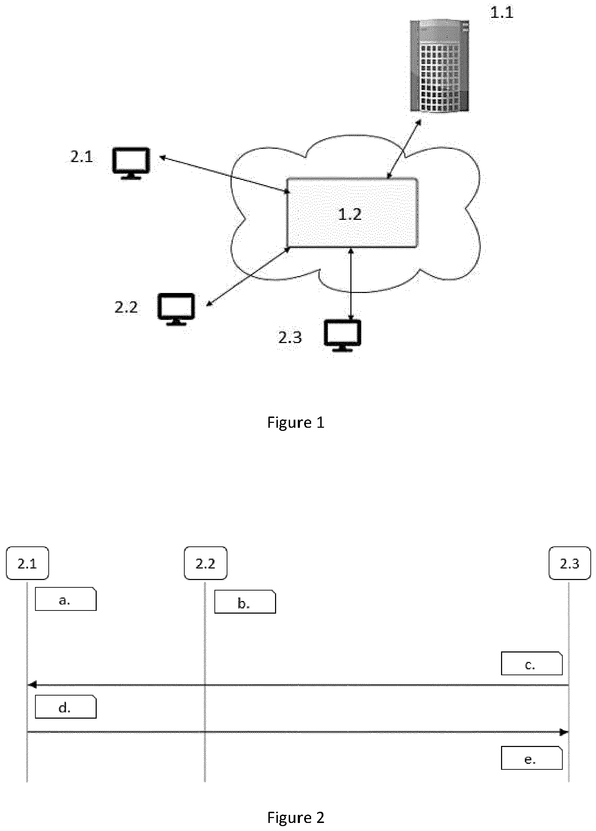

In a second step of the method, the at least one slave-device (2.1, 2.2) joins the virtual playback room (1.2), accessing the respective link. As illustrated by figure 2, when a new slave-device (2.3) joins the room (1.2), it sends "Hello" type message to the master-device (2.1) in order to establish base room (1.2) configuration settings.

In a third step of the method, the master-device (2.1) transmits to the slave-devices (2.2, 2.3) in the virtual playback room (1.2) a synchronization message including at least a common master shared-time reference. The common master shared-time reference is a metric that establishes the reference for the media content flow position of each slave device (2.2, 2.1). Said time reference may be generated based on a universally recognized digital timestamp, such as *posUnixTime.*

In a fourth step of the method, each slave-device (2.2, 2.3) calculates the position of its streaming media content flow based on the common master shared-time reference contained in the synchronization message sent by the master-device (2.1). More particularly, the device position may be calculated using the following formula:

$$device_{position} = posUnixTime + (myBufferEst - BufferEst)$$
$$+ (mytimenow - time)$$

$$(\text{equation 1})$$

wherein,

posUnixTime is device position for linear content expressed in Epoch Unix time;
myBufferEst and BufferEst represents the buffer estimation of the device and the buffer estimation of the device that sent the synchronization message, respectively;
mytimenow and time is the device time and the time of the device that sent the synchronization message, when said message is sent, respectively.

In a fifth step of the method, slave-devices (2.2, 2.3) periodically, during the streaming media content playback, transmit a status report message to the master-device (2.1). Said status report messages include information about the position of streaming media content flow being reproduced by the device (2.2, 2.3).

In a sixth step of the method, the master-device (2.1) transmits a new synchronization message to a slave-device (2.2, 2.3) whose position of streaming media content flow is different from the common master shared-time reference.

In one embodiment of the method, the transmission of a synchronization message from a master-device (2.1) to at least one slave-device (2.2, 2.3), may comprise the following steps:

- starting a synchronization timer;
- interrupting the synchronization timer when a status report message from at least one slave-device (2.2, 2.3) is received by the master-device (2.1);
- transmitting the synchronization message to the slave-devices (2.2);
- resetting the synchronization timer.

The method described in the present application also considers the configuration of a new content to be transmitted, by the master-device (2.1). As illustrated by figure 3, the master device (2.1) changes the position of the media content flow to be reproduced and notifies all slave-devices (2.2, 2.3) with a synchronization message. Subsequently, the slave devices (2.2, 2.3) calculate the respective new content flow positions to seek. Said position may be calculated using equation 1.

Additionally, the method described in the present application also considers the possibility of the master-device leaves the room (1.2), scenario where a new master-device will have to be assigned. For this purpose, an ordered list of all devices (2.1, 2.2, 2.3) connected to the room (1.2) is used, which is ordered according to a certain rule. In a preferred embodiment, the room's device list is ordered alphabetically, and the new master-device is the first device mentioned in the list.

For this procedure to be put into practice, after a synchronization message is received, each slave-device (2.2, 2.3) starts an announce-timer and if a predefined announce time interval expires it is considered that master-device (2.1) has left the virtual playback room (1.2). In this case, as illustrated by figure 4, the slave-devices (2.2, 2.3) send an announce message to a new master-device, ie, the first device mentioned in the list of devices of the room (1.2). The announce message is used to establish a synchronization hierarchy. Then, the new master-device analyses the position of streaming media content flow being reproduced by a slave-device (2.3) and:

- it sends a synchronization message to the slave-devices (2.3) if a delay in relation to the common master shared-time reference is detected; or
- if the common master shared-time reference is delayed in relation to a position of streaming media content flow of a slave-device (2.3), the new master-device executes an asynchronous function to update the common master shared-time reference in relation to the most advanced streaming media content flow position of a slave-device (2.3) connected to the virtual playback room; and

  - the new master-device transmits a synchronization message to the other slave-devices (2.3) including the updated common master shared-time reference.

The predefined announce time interval may be 300 seconds. Additionally, the asynchronous function executed by the new master-device may be a seek to function.

In another embodiment of the method, the virtual playback room (1.2) implements a real-time communication protocol to enable communication between master (2.1) and slave display devices (2.2). More particularly, the real-time communication protocol is WebRTC, which is a free, open software project that provides browsers and mobile applications with Real-Time Communications (RTC) capabilities via simple application programming interfaces (API). It enables rich, high-quality RTC applications to be developed for the browser, mobile platforms, and IoT devices, and allows them all to communicate via a common set of protocols. The WebRTC protocol comprises video, audio and text data channels. The WebRTC protocol is advantageous because it enables real-time communications, such as text, voice and video, to be delivered via web browsers, mobile applications and IoT devices without additional software being necessary (e.g., browser plug-ins or extensions). WebRTC standardisation groups in the Internet Engineering Task Force (IETF) and the World Wide Web Consortium (W3C) have defined a set of protocols, JavaScript APIs and native libs for these services which can be used to develop web/native applications that use text, voice and video.

In this particular case, the text channel is used to transmit synchronization messages from the master-device (2.1) to slave-devices (2.2, 2.3) and status report messages from slave-devices to the master-device (2.1), and the data flowing in the video, audio and text channels is transmitted over a UDP connection.

In another embodiment, the server-based virtual playback room (1.2) is implemented through an API being executed at the media content server (1.1). Said application programming interface may be a LiveKit platform.

The present application is also directed to a system for media content playback synchronization in a plurality of client display devices. Such system comprises:

- a communication interface for communicating with a network media content server (1.1) and client display devices (2.1, 2.2, 2.3);
- a client display device (2.1, 2.2, 2.3) comprising one or more processors configured to:

  - retrieve media content from the media content server (1.1) in response to a user input; said media being retrieve as streaming digital video content;
  - receive or transmit synchronization instructions from other display devices (2.1, 2.2, 2.3);

  and

  - perform playback of the retrieved content by transmitting content playback data to display means;
  - manipulate the playback based on execution of the synchronization instructions;

- the server (1.1) and the client display devices (2.1, 2.2, 2.3) being configured to operate the method of any of the claims 1 to 12.

All elements of the system form a computing architecture that is connected via a wireless communication network.

## EMBODIMENT

In a preferred embodiment of the method and system described in the present application, the synchronization is implemented based on the open-source project *Livekit* that uses the WebRTC protocol to enable real-time communication over video, audio and text channels. A user (2.1) selects a media content to watch and create a virtual playback room (1.2) to invite users (2.2, 2.3) to join. On the other side each friend (2.2, 2.3) opens the shared link to start watching the content in the dedicated room (1.2). To guarantee that all the users (2.1, 2.2, 2.3) are viewing the media content at the same time the WebRTC text channel is used to sync the display devices (2.1, 2.2, 2.3). The WebRTC text channel usually is used to send chat messages between users one-to-one or one-to-many but on the present case will be also used to put in communication the devices (2.1, 2.2, 2.3) so they will notify each other their media content flow positions. *LiveKit* allows a user to publish arbitrary data messages to any other user in the room (1.2) via the LocalParticipant.publishData API. Room (1.2) data is published via WebRTC data channels and *LiveKit* API would forward that data to one or more display devices (2.1, 2.2, 2.3) in the room (1.2). Since the data is sent via UDP, allows to have a flexibility in regard to the reliability of delivery.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

**Claims**

1. A computer implemented method for media content playback synchronization in a plurality of client display devices; the media content being streamed from a media content server and comprising the following steps:

   i. a master-device creates a server-based virtual playback room of streaming media content;
   ii. at least one slave-device joins the virtual playback room;
   iii. the master-device transmits to the slave-devices in the virtual playback room a synchronization message including at least a common master shared-time reference;
   iv. each slave-device calculates the position of streaming media content flow to be reproduced based on the common master shared-time reference contained in the synchronization message sent by the master-device;
   v. periodically during the streaming media content playback, slave-devices transmit a status report message to the master-device, including information about the position of streaming media content flow being reproduced;
   vi. master-device transmits a new synchronization message to a slave-device whose position of streaming media content flow is different from the common master shared-time reference.

2. Method according to claim 1, wherein the step of creating a virtual playback room of streaming media content by a master-device comprises:

   - Accessing to the media content server;
   - selecting a streaming media content to be reproduced;
   - creating a virtual playback room to playback the selected streaming media content; said room comprising a correspondent access link;
   - transmitting the access link to at least one slave-device.

3. Method according to any of the previous claims, wherein the transmission of a synchronization message from a master-device to at least one slave-device, comprises:

   - starting a synchronization timer;
   - interrupting the synchronization timer when a status report message from at least one slave-device is received by the master-device;
   - transmitting the synchronization message to the slave-devices;
   - resetting the synchronization timer.

4. Method according to any of the previous claims, further comprising the steps of:

   - after a synchronization message is received, each slave-device starts an announce-timer;
   - if a predefined announce time interval expires, meaning that the master-device has left the virtual playback room, the slave-devices send an announce message to a new master-device in order to establish a synchronization hierarchy;
   - the new master-device analyses the position of streaming media content flow being reproduced by a slave-device and:

- the new master-device sends a synchronization message to the slave-devices if a delay in relation to the common master shared-time reference is detected; or
- if the common master shared-time reference is delayed in relation to a position of streaming media content flow of a slave-device, the new master-device executes an asynchronous function to update the common master shared-time reference in relation to the most advanced streaming media content flow position of a slave-device connected to the virtual playback room; and

- the new master-device transmits a synchronization message to the other slave-devices including the updated common master shared-time reference.

5.  Method according to claim 4, wherein the predefined announce time interval is 300 seconds.

6.  Method according to claims 4 or 5, wherein the new master-device is the first device mentioned in a list of devices connected in the virtual playback room; said list being ordered alphabetically.

7.  Method according to any of the previous claims 4 to 6, wherein the asynchronous function executed by the new master-device is a seek to function.

8.  Method according to any of the previous claims, wherein the virtual playback room implements a real-time communication protocol to enable communication between master and slave display devices.

9.  Method according to claim 8, wherein the real-time communication protocol is WebRTC; the WebRTC comprising video, audio and text data channels.

10. Method according to claim 9, wherein the text channel is used to transmit synchronization messages from the master-device to slave-devices and status report messages from slave-devices to the master-device.

11. Method according to claims 9 and 10, wherein the data flowing in the video, audio and text channels is transmitted over a UDP connection.

12. Method according to any of the previous claims, wherein the server-based virtual playback room is implemented through an application programming interface being executed at the media content server; optionally, said application programming interface is LiveKit.

13. A system for media content playback synchronization in a plurality of client display devices comprising:

- a communication interface for communicating with a network media content server and client display devices;
- a client display device comprising one or more processors configured to:

- retrieve media content from the media content server in response to a user input;
- receive or transmit synchronization instructions from other display devices;

and

- perform playback of the retrieved content by transmitting content playback data to display means;
- manipulate the playback based on execution of the synchronization instructions;

- the server and the client display devices being configured to operate the method of any of the claims 1 to 12.

14. The system according to claim 13, wherein the media content is retrieved as streaming digital video content.

1.1

2.1

1.2

2.2

2.3

Figure 1

2.1

2.2

2.3

a.

b.

c.

d.

e.

Figure 2

Figure 3

Figure 4

Europäisches
Patentamt

European
Patent Office

Office européen
des brevets

# EUROPEAN SEARCH REPORT

**Application Number**

EP 22 21 3643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DONGWOO KWON ET AL: "PlaySharing: A group synchronization scheme for media streaming services in hierarchical WLANs", INTERNATIONAL JOURNAL OF NETWORK MANAGEMENT, WILEY, GB, vol. 28, no. 6, 10 July 2018 (2018-07-10), page n/a, XP071967309, ISSN: 1055-7148, DOI: 10.1002/NEM.2024 * the whole document * | 1-14 | INV. H04N21/2381 H04N21/242 H04N21/43 H04N21/4788 H04N21/8547 H04N21/436 |
| A | US 10 536 741 B1 (MADISON SETH [US] ET AL) 14 January 2020 (2020-01-14) * abstract * * figure 2 * * column 1, lines 43-46 * * column 2, lines 27-34 * * column 9, line 19 – column 11, line 5 * * column 12, line 66 – column 13, line 47 * | 1-14 | |
| A | EP 3 474 558 A2 (APPLE INC [US]) 24 April 2019 (2019-04-24) * paragraphs [0017], [0023], [0036] – [0038] * | 1-14 | TECHNICAL FIELDS SEARCHED (IPC) H04N |
| A | US 2013/067116 A1 (OSTERGREN BRIAN H [US]) 14 March 2013 (2013-03-14) * the whole document * | 1-14 | |
| A | US 2018/004244 A1 (WOODHEAD MARTIN [GB] ET AL) 4 January 2018 (2018-01-04) * the whole document * | 1-14 | |

The present search report has been drawn up for all claims

| Place of search | Date of completion of the search | Examiner |
|---|---|---|
| The Hague | 18 August 2023 | Troya Chinchilla, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

**EP 22 21 3643**

This annex lists the patent family members relating to the patent documents cited in the above-mentioned European search report.
The members are as contained in the European Patent Office EDP file on
The European Patent Office is in no way liable for these particulars which are merely given for the purpose of information.

**18-08-2023**

| Patent document cited in search report | | Publication date | Patent family member(s) | | Publication date |
|---|---|---|---|---|---|
| US 10536741 | B1 | 14-01-2020 | US | 10536741 B1 | 14-01-2020 |
| | | | US | 2020162784 A1 | 21-05-2020 |
| | | | US | 2021235149 A1 | 29-07-2021 |
| | | | US | 2022353569 A1 | 03-11-2022 |
| EP 3474558 | A2 | 24-04-2019 | AU | 2018250489 A1 | 09-05-2019 |
| | | | CN | 109697992 A | 30-04-2019 |
| | | | CN | 114495994 A | 13-05-2022 |
| | | | CN | 115713949 A | 24-02-2023 |
| | | | EP | 3474558 A2 | 24-04-2019 |
| | | | KR | 20190044523 A | 30-04-2019 |
| | | | KR | 20200124644 A | 03-11-2020 |
| | | | KR | 20210014730 A | 09-02-2021 |
| | | | US | 2019124159 A1 | 25-04-2019 |
| | | | US | 2023053350 A1 | 23-02-2023 |
| US 2013067116 | A1 | 14-03-2013 | NONE | | |
| US 2018004244 | A1 | 04-01-2018 | US | 2018004244 A1 | 04-01-2018 |
| | | | US | 2019286188 A1 | 19-09-2019 |
| | | | US | 2021004045 A1 | 07-01-2021 |

EPO FORM P0459

For more details about this annex : see Official Journal of the European Patent Office, No. 12/82